# FASCICULE DE BREVET EUROPEEN

(11) **EP 1 093 336 B1**
(45) Date de publication et mention de la délivrance du brevet: **24.05.2006**
(21) Numéro de dépôt: 99929404.4
(22) Date de dépôt: 05.07.1999
(51) Int. Cl.: A23K 1/16, A23K 1/18

(54) **COMPOSITION POUR VOLAILLES PONDEUSES CONTENANT DU L-PIDOLATE DE CALCIUM**
L-CALCIUM-PIDOLAT ENTHALTENDE ZUSAMMENSETZUNG FÜR LEGEGEFLÜGEL
COMPOSITION FOR LAYING HENS CONTAINING CALCIUM L-PIDOLATE

(30) Priorité: 08.07.1998 FR 9808743
(43) Date de publication de la demande: 25.04.2001
(73) Titulaire: Laurenceau, Rémy, 44700 Orvault (FR)
(72) Inventeur: Laurenceau, Rémy, 44700 Orvault (FR)
(74) Mandataire: Fosse, Danièle
(86) Numéro de dépôt international: PCT/FR1999/001619
(87) Numéro de publication internationale: WO 2000/002461

(56) Documents cités:
- DE-C- 3 735 264
- FR-A- 2 724 844
- E. MOCZAR ET AL.: "Etude pharmacologique du pyrrolidone carboxylate de calcium" RHUMATOLOGIE, vol. 8, no. 2, 1979, pages 61-76, XP002096837 FR

## Description

La présente invention concerne de manière générale l'utilisation du L-pidolate de calcium pour l'obtention d'un agent améliorant la qualité de la coquille des oeufs, en particulier la résistance mécanique et l'aspect et, en particulier, une composition administrable aux volailles pondeuses en vue de renforcer la qualité de la coquille des oeufs produits par lesdites volailles.

Les élevages avicoles se sont transformés depuis plusieurs années en élevages industriels intensifs au détriment des conditions d'élevage (réduction de l'espace, absence de lumière naturelle, etc.). Cette évolution s'est traduite pour les volailles pondeuses adultes par une diminution de la qualité des coquilles des oeufs pondus. Cette baisse de la qualité des coquilles d'oeufs et, en particulier, de la résistance mécanique desdites coquilles, a engendré une augmentation importante du pourcentage d'oeufs cassés, fêlés ou micro-fêlés provoquant une perte importante à l'élevage ou en cours de transport. Par ailleurs, cet abaissement de la qualité des coquilles d'oeufs oblige l'éleveur à réduire la durée de vie productive de la volaille pondeuse car cette dégradation de la qualité se révèle plus particulièrement à partir de la soixantième semaine de vie de la volaille pondeuse.

Bien que le processus d'élaboration de la coquille d'oeuf ne soit pas parfaitement bien connu, il a malgré tout été démontré qu'un apport supplémentaire en éléments nutritifs, en particulier en calcium, en phosphore et en vitamine D3 dans la ration alimentaire des volailles pondeuses pouvait avoir des effets bénéfiques sur les propriétés fonctionnelles de la coquille. C'est pourquoi différentes compositions alimentaires supplémentées ont été mises au point. De telles compositions sont notamment décrites dans les brevets FR-A-2.354.056, EP-A-0.383.116, EP-A-0.420.878, EP-A-0.594.862, WO-96.35339, FR-A-2.633.158.

Comme le montre la liste des documents ci-dessus, les solutions sont diverses et variées. Toutefois, toutes ces solutions ont aujourd'hui montré leurs limites puisque, au-delà des doses prescrites dans les documents précités, on n'obtient en général aucun effet supplémentaire sur la résistance mécanique de la coquille. Par ailleurs, chacune des compositions proposées ci-dessus présente des inconvénients liés soit à la dose d'éléments actifs devant être utilisée, soit à la difficulté de mettre en oeuvre l'élément actif en raison des caractéristiques intrinsèques dudit élément actif, soit à l'administration de cet élément actif en raison du goût de cet élément actif non apprécié par les volailles pondeuses. De tels inconvénients génèrent soit des freins économiques liés aux doses et par suite aux coûts engendrés par supplémentation, soit des problèmes techniques liés par exemple aux machines nécessaires à la fabrication des compositions, soit des problèmes de refus d'ingestion par lesdites volailles pondeuses.

Un but de la présente invention est donc de proposer comme agent améliorant la qualité, en particulier la résistance mécanique et l'aspect des coquilles d'oeufs, un sel organo calcique jamais utilisé à ce jour dans l'alimentation animale.

Un autre but de la présente invention est de proposer une composition administrable aux volailles pondeuses en vue d'améliorer la qualité, en particulier la résistance mécanique, la résistance à la contamination bactérienne et l'aspect des coquilles d'oeufs, cette composition, simple à préparer, contenant l'élément actif insipide en quantité très faible comme définie dans la revendication 1.

Un autre but de la présente invention est de proposer une composition administrable aux volailles pondeuses en vue d'améliorer la qualité, en particulier la résistance mécanique et l'aspect des coquilles d'oeufs dont l'élément actif agit immédiatement, dès le premier jour de son administration aux volailles pondeuses comme définie dans la revendication 1.

A cet effet, l'invention a encore pour objet l'utilisation du L-pidolate de calcium pour l'obtention d'un agent améliorant la qualité de la coquille des oeufs, en particulier la résistance mécanique et l'aspect.

L'invention a pour objet une composition pour volailles pondeuses administrable par voie orale du type comprenant au moins un élément actif améliorant la qualité de la coquille des oeufs, en particulier la résistance mécanique et aspect,
caractérisée en ce qu'elle contient, comme élément actif améliorant la qualité de la coquille des oeufs, au moins du L-pidolate de calcium, et se présente sous forme de L-pidolate de calcium encapsulé, ou d'un mélange de L-pidolate de calcium et d'au moins un support pour former un pré-mélange alimentaire, ledit support étant du carbonate de calcium déshydraté supplémenté en farine d'algue déshydratée ou une argile alimentaire, ou sous forme d'un mélange de L-pidolate de calcium, d'acide citrique et de bicarbonate de sodium, pour former une composition effervescente incorporable dans l'eau de boisson des volailles por deuses.

Le choix du L-pidolate de calcium permet d'obtenir, à très faible dose, un effet immédiat sur les propriétés fonctionnelles de la coquille. Il en résulte des possibilités d'intervention parfaitement adaptées à un élevage en masse. La composition alimentaire est, du fait des caractéristiques intrinsèques du L-pidolate de calcium, aisée à préparer. Le support est un composant qui évite les risques liés à l'hygroscopie du L-pidolate de calcium et permet l'obtention d'un mélange homogène.

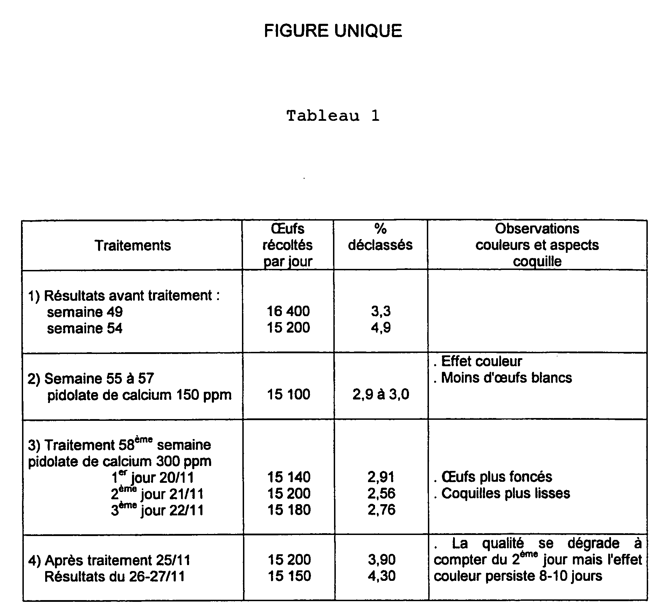

L'invention sera bien comprise à la lecture de la description suivante d'exemples de réalisation, en référence à la figure unique qui représente un tableau montrant l'influence du L-pidolate de calcium sur le pourcentage d'oeufs déclassés ainsi que sur la couleur et l'aspect des coquilles d'oeufs.

L'invention repose sur une constatation des présents demandeurs, à savoir l'effet immédiat et à faible dose du L-pidolate de calcium sur la solidité des coquilles d'oeufs. Il est à noter que, dans la littérature, le L-pidolate de calcium est encore appelé pyroglutamate de calcium ou pyrrolidone carboxylate de calcium. De même, la synthèse du L-pidolate de calcium est bien connue. Cette synthèse comprend une première étape de cyclisation stéréospécifique en milieu aqueux de l'acide L-glutamique en acide L-pidolique puis une seconde étape de réaction de l'acide L-pidolique avec un oxyde ou un carbonate métallique en milieu aqueux.

Les mécanismes d'incorporation du calcium dans la coquille d'oeuf sont mal connus. En conséquence, à ce jour, les demandeurs ne peuvent expliquer de manière précise le mode d'action du L-pidolate de calcium, bien que l'hypothèse la plus probable consiste à présumer que le L-pidolate de calcium remplit principalement une fonction de promoteur de l'assimilation du calcium dans le métabolisme conduisant à la constitution des coquilles d'oeufs et, de façon plus secondaire, une fonction de source spécifique de calcium dans la ration alimentaire des volailles pondeuses.

L'invention consiste donc, dans sa généralité, à utiliser le L-pidolate de calcium pour l'obtention d'un agent améliorant la qualité de la coquille des oeufs, en particulier la résistance mécanique et l'aspect. Bien que les modes d'utilisation de ce L-pidolate de calcium puissent être divers et variés, le seul mode d'utilisation qui sera décrit ci-après est celui dans lequel le L-pidolate de calcium est administré aux volailles pondeuses.

Le L-pidolate de calcium est un produit cristallisé soluble dans l'eau. Ses caractéristiques permettent donc de préparer aisément une composition administrable aux volailles pondeuses et contenant comme élément actif améliorant la qualité de la coquille des oeufs, en particulier la résistance mécanique et l'aspect, au moins du L-pidolate de calcium. Cette administration du L-pidolate de calcium aux volailles pondeuses s'effectue de préférence à travers l'alimentation desdites volailles soit en mélange dans l'aliment complet, soit en dissolution dans l'eau de boisson.

Le mode de réalisation consiste à préparer une composition constituée d'un mélange de L-pidolate de calcium et d'au moins un support pour former un pré-mélange alimentaire directement incorporable au reste de l'alimentation des volailles pondeuses. Le L-pidolate de calcium, en raison de son caractère hygroscopique, doit être associé à un produit qui évite toute prise en masse. Cela sera plus difficilement le cas pour un aliment fini. Par ailleurs, l'incorporation d'un ajout chez un fabricant d'aliments doit être au minimum de 5 ‰ pour produire un aliment homogène. En conséquence, en raison des dosages préconisés le L-pidolate de calcium est mélangé à un support pour former un pré-mélange alimentaire qui sera lui-même ultérieurement incorporé à d'autres matières premières constituant l'aliment fini. Généralement, dans ce pré-mélange alimentaire, le L-pidolate de calcium est pulvérulent et le support est à l'état déshydraté. On peut citer une composition dans laquelle le support est du carbonate de calcium déshydraté éventuellement supplémenté en farine d'algue déshydratée ou une argile alimentaire. Ainsi, lorsque les doses de L-pidolate de calcium à administrer aux volailles pondeuses sont relativement faibles, on prépare un pré-mélange constitué de L-pidolate de calcium à l'état pulvérulent : 3 % et de carbonate de calcium à l'état de poudre déshydratée : 97 %. Un ajout de 5 ‰ à 10 ‰ de ce pré-mélange dans un aliment produit un aliment fini de 150 à 300 ppm de L-pidolate de calcium. Lorsque, au contraire, la dose de L-pidolate de calcium devant être administrée à l'animal est plus élevée, on prépare un pré-mélange alimentaire constitué de L-pidolate de calcium : 16 %, carbonate de calcium sous forme de poudre déshydratée : 84 %. Dans ce cas, un ajout de ce pré-mélange de 5 °/oo à une composition alimentaire classique produit un aliment à 800 ppm de L-pidolate de calcium et un ajout de 7,5 °/oo de ce pré-mélange produit un aliment à 1200 ppm. En pratique, le L-pidolate de calcium est intégré à la ration quotidienne des volailles pondeuses dans une proportion permettant d'atteindre un taux de 150 à 1 200 ppm de L-pidolate de calcium dans ladite ration selon l'état de dégradation de la coquille.

Dans les exemples fournis ci-dessus, il est possible de remplacer l'utilisation de carbonate de calcium pur à l'état déshydraté par un mélange de carbonate de calcium sous forme de poudre déshydratée associée à une poudre d'algue déshydratée ou par une argile alimentaire. Dans tous les exemples décrits ci-dessus, le L-pidolate de calcium est présent à l'état pulvérulent sous forme de cristaux de l'ordre du micron.

Toutefois, d'autres formes de réalisation du L-pidolate de calcium peuvent être envisagées. Ainsi, le L-pidolate de calcium peut être encapsulé. Les essais qui ont été menés permettent de démontrer que, sous cette forme micro-encapsulée, à une concentration en L-pidolate de calcium identique, on obtient un effet supplémentaire sur la qualité de la coquille d'oeuf sous la forme micro-encapsulée par rapport à la forme pulvérulente. Le L-pidolate de calcium micro-encapsulé est, de la même manière que le L-pidolate à l'état pulvérulent, mélangé à du carbonate de calcium ou à un mélange de carbonate de calcium et de poudre d'algue ou à une argile alimentaire.

D'autres modes d'administration du L-pidolate de calcium aux volailles pondeuses peuvent également être envisagés. Ainsi, le L-pidolate de calcium peut être à l'état pulvérulent pour pouvoir être directement dissous dans l'eau de boisson des volailles pondeuses. Ce L-pidolate de calcium peut encore être contenu dans une composition constituée d'un mélange de L-pidolate de calcium, d'acide citrique et de bicarbonate de sodium pour former une composition effervescente incorporable dans l'eau de boisson des volailles pondeuses. Cette composition effervescente pourrait être constituée comme suit :
L-pidolate de calcium : 50 %
Acide citrique + bicarbonate de sodium : 50 %.

On peut encore envisager de préparer une composition constituée d'un mélange de L-pidolate de calcium en tant qu'élément actif et d'une solution aqueuse pour former une solution buvable directement incorporable à l'eau de boisson des volailles pondeuses. A titre d'exemple, la composition de cette solution buvable pourrait être telle que suit : 150 à 200 g de L-pidolate de calcium par litre d'eau. Cette solution serait incorporée dans l'eau de boisson des volailles pondeuses à une proportion de 0,6 à 4,5 litres pour 1 000 litres d'eau de boisson.

Les trois modes de réalisation décrits ci-dessus, dans lesquels on utilise l'eau de boisson des volailles pondeuses pour administrer le L-pidolate de calcium auxdites volailles pondeuses, peuvent être une solution venant en complément d'un mode d'administration dans lequel le L-pidolate de calcium est administré en mélange avec l'aliment.

Pour démontrer l'efficacité du L-pidolate de calcium, des essais ont été réalisés dans un poulailler équipé d'une ventilation statique et constitué de cages de 50 x 35 cm pour cinq poules, l'élevage s'effectuant sur du lisier. L'essai a porté sur 19 300 poules. La mise en ponte s'effectuait à la dix-neuvième semaine sur des poules pesant 1,650 kg. Les résultats de cet essai sont conformes à ceux du tableau 1. Le pourcentage des déclassés correspond au pourcentage d'oeufs à coquilles fêlées, chaque oeuf ayant été sérieusement examiné au mirage afin de détecter toute rupture de coquille (fêlures, trous, etc.). Le pourcentage de coquilles d'oeufs non fêlées a été calculé à partir des oeufs sur lesquels aucune rupture de la coquille n'a été observée au mirage. Pour chaque essai, l'apport de L-pidolate de calcium a été comptabilisé. L'apport en calcium par d'autres éléments nutritifs a été réduit pour tenir compte de l'apport en calcium effectué par l'intermédiaire du L-pidolate de manière à prouver que l'effet obtenu n'était pas lié à l'apport supplémentaire en calcium. Comme le montre le tableau 1, dès le lendemain du jour où le L-pidolate de calcium a été administré aux poules pondeuses, on a constaté une diminution du pourcentage d'oeufs déclassés. On constate par ailleurs que l'effet du L-pidolate de calcium sur la qualité, en particulier la résistance mécanique des coquilles d'oeufs, s'atténue pour disparaître complètement dès le deuxième jour après la fin du traitement. Par contre, les améliorations apportées par le L-pidolate de calcium, en particulier sur la couleur de l'oeuf puisqu'on constate moins d'oeufs blancs ou d'aspect crayeux, persistent huit à dix jours après l'arrêt du traitement. Comme le résultat est immédiatement quantifiable lors du triage des oeufs chez le producteur, il est aisé d'ajuster la supplémentation en L-pidolate de calcium. Les essais représentés dans le tableau 1 ont été effectués en hiver pendant la période octobre-novembre. Ces essais montrent qu'une administration aux volailles pondeuses de L-pidolate de calcium permet de maintenir le pourcentage d'oeufs déclassés à une valeur sensiblement constante.

La détérioration de la qualité de coquille s'accentue entre la cinquante cinquième et la soixante cinquième semaine. Les poules sont généralement sacrifiées à soixante huit - soixante dix semaines. D'autres essais ont montré que la dégradation de la qualité de la coquille entre la soixantième semaine et la soixante-douzième semaine peut être stabilisée par apport de L-pidolate de calcium. En conséquence, la durée d'exploitation de la poule peut donc être prolongée dans le but d'améliorer la rentabilité de l'élevage en réduisant la charge d'amortissement poule/oeuf.

Dans les essais menés correspondant au tableau 1, le L-pidolate de calcium a été administré aux poules pondeuses dans l'aliment après préparation d'un pré-mélange conformément à ce qui a été précisé ci-dessus. Les essais démontrent clairement l'effet du L-pidolate de calcium sur la solidité de la coquille, en particulier sur sa 5 résistance mécanique et à titre subsidiaire sur son aspect. Les différents essais permettent de conclure aux préconisations d'emploi suivants :
la dose recommandée de L-pidolate de calcium dans l'aliment oscille entre 150 et 1 200 ppm. Les facteurs à considérer sont :
   - l'âge des poules au début du traitement puis en cours de traitement ; l'apport croît avec l'âge ;
   - la qualité de coquille recherchée ;
   - l'heure de distribution : l'efficacité maximale étant obtenue lorsque la consommation a lieu en fin de journée, 16-17 heures ;
   - la température d'ambiance.

Les différents essais laissent à penser que l'administration de L-pidolate de calcium doit être débutée à partir de la quarante cinquième semaine en été et de la cinquantième semaine en hiver.

Les taux d'incorporation peuvent être tels que suit :
Début de traitement :

| | |
|---|---|
| 45^{ème} semaine en été-50^{ème} semaine en hiver : | 150-200 ppm |
| 50^{ème}-55^{ème} semaine | 200 ppm |
| 55^{ème}-60^{ème} semaine | 200 à 300 ppm |
| 60^{ème}-65^{ème} semaine | 200 à 400 ppm |
| 65^{ème}-70^{ème} semaine | 400 à 800 ppm |

Au-delà : allongement de la durée d'exploitation : 800-1200 ppm. Il doit être noté que des écarts importants sont observés entre les élevages. Le taux d'incorporation doit donc être modulé en fonction des résultats.

Il est bien évident que les valeurs numériques fournies ci-dessus ne sont données qu'à titre d'exemple et ne limitent en rien la portée de l'invention.

## Revendications

1. Composition pour volailles pondeuses administrable par voie orale du type comprenant au moins un élément actif améliorant la qualité de la coquille des oeufs, en particulier la résistance mécanique et aspect,
**caractérisée en ce qu'**elle contient, comme élément actif améliorant la qualité de la coquille des oeufs, au moins du L-pidolate de calcium, et se présente sous forme de L-pidolate de calcium encapsulé, ou d'un mélange de L-pidolate de calcium et d'au moins un support pour former un pré-mélange alimentaire, ledit support étant du carbonate de calcium déshydraté supplémenté en farine d'algue déshydratée ou une argile alimentaire, ou sous forme d'un mélange de L-pidotate de calcium, d'acide citrique et de bicarbonate de sodium, pour former une composition effervescente incorporable dans l'eau de boisson des volailles por deuses.

2. Utilisation du L-pidolate de calcium pour l'obtention d'un agent améliorant la qualité de la coquille des oeufs, en particulier la résistance mécanique et l'aspect desdites coquilles.

3. Utilisation du L-pidolate de calcium pour la fabrication d'une composition orale administrable aux volailles pondeuses en vue d'améliorer la qualité de la coquille des oeufs, en particulier la résistance mécanique et l'aspect desdites cc quilles.

4. Utilisation du L-pidolate de calcium pour la fabrication d'une composition orale administrable aux volailles pondeuses conformément à la revendication 3,
**caractérisée en ce que** ladite composition est administrée aux volailles pondeuses, soit dans la proportion de 150 à 1 200 ppm de L-pidolate de calcium dans la ration alimentaire quotidienne, soit dans la proportion de 90 à 900 mg de L-pidolate de calcium/L d'eau de boisson.

## Claims

1. An orally administrable composition for laying poultry of the type comprising at least one active component which improves egg shell quality, in particular mechanical strength and appearance,
**characterised in that** it comprises as active component which improves egg shell quality,at least calcium L-pidolate,and takes the form of encapsulated calcium L-pidolate, or of a mixture of calcium L-pidolate and at least one support to form a feedstuff premix, said support being dehydrated calcium carbonate supplemented with dehydrated algal flour or an edible clay, or in the form of a mixture of calcium L-pidolate, citric acid and sodium bicarbonate, to form an effervescent composition which may be incorporated into the laying poultry's drinking water.

2. Use of calcium L-pidolate to obtain an agent which improves egg shell quality, in particular the mechanical strength and appearance of said shell.

3. Use of calcium L-pidolate for the production of an oral composition which can be administered to laying poultry with the aim of improving egg shell quality, in particular the mechanical strength and appearance of said shell.

4. Use of calcium L-pidolate for the production of an oral composition which can be administered to laying poultry according to claim 3, **characterised in that** said composition is administered to laying poultry, either in a proportion of 150 to 1200 ppm of calcium L-pidolate in the daily food ration or in the proportion of 90 to 900 mg of calcium L-pidolate per litre of drinking water.

## Patentansprüche

1. Zusammensetzung für Legegeflügel zur oralen Einnahme, enthaltend wenigstens einen Wirkstoff, der die Qualität der Eierschale insbesondere hinsichtlich der mechanischen Widerstandsfähigkeit und des Aussehens verbessert, **dadurch gekennzeichnet, dass** diese als die Qualität der Eierschale verbessernder Wirkstoff wenigstens Calcium-L-Pidolat enthält, wobei dieser entweder in einer verkapselten Calcium-L-Pidolat-Form oder einem Calcium-Gemisch aus Calcium-L-Pidolat und wenigstens einem Träger zur Bildung eines Nahrungsmittel-Vorgemisches vorliegt, wobei der besagte Träger besteht aus mit dehydratisiertem Algenmehl ergänztem dehydratisierten Calciumcarbonat oder einem Nahrungsmittel-Lehm oder einer Gemischform aus Calcium-L-Pidolat, Zitronensäure und Natriumbicarbonat, zur Bildung einer dem Trinkwasser des Legegeflügels zusetzbaren, sprudelnden Mischung.

2. Verwendung von Calcium-L-Pidolat zur Bildung eines Mittels, das die Qualität der Eierschale verbessert, insbesondere die mechanische Widerstandsfähigkeit und deren Aussehen.

3. Verwendung von Calcium-L-Pidolat zur Erzeugung einer Zusammensetzung für Legegeflügel zur oralen Einnahme, welche die Qualität der Eierschale insbesondere hinsichtlich der mechanischen Widerstandsfähigkeit und des Aussehens verbessert.

4. Verwendung von Calcium-L-Pidolat zur Erzeugung einer Zusammensetzung für Legegeflügel zur oralen Einnahme nach Anspruch 3, **dadurch gekennzeichnet, dass** diese dem Legegeflügel entweder in einem Anteil von 150 bis 1200 ppm Calcium-L-Pidolat mittels der täglichen Nahrungsmittelration oder im Anteil von 90 bis 900 mg Calcium-L-Pidolat/L Trinkwasser verabreicht wird.
